# EUROPEAN PATENT SPECIFICATION

(11) **EP 2 051 359 B1**
(45) Date of publication and mention of the grant of the patent: **18.07.2018**
(21) Application number: 08006050.2
(22) Date of filing: 28.03.2008
(51) Int. Cl.: H02M 3/156, H02H 3/16, H02H 9/04

(54) **Power supply circuit and earth leakage circuit breaker using the same**
Stromversorgungsschaltung und Fehlerstrom-Schutzschalter damit
Circuit d'alimentation électrique et disjoncteur contre pertes à la terre l'utilisant

(30) Priority: 09.10.2007 JP 2007262971
(43) Date of publication of application: 22.04.2009
(73) Proprietor: MITSUBISHI ELECTRIC CORPORATION, Chiyoda-ku Tokyo 100-8310 (JP)
(72) Inventor: Kanayama, Kenj, Tokyo 102-0073 (JP); Kamitani, Shintaro, Tokyo 102-0073 (JP); Tsukamoto, Tatsuyuki, Tokyo 102-0073 (JP); Sato, Kazushi, Tokyo 102-0073 (JP)
(74) Representative: Hoffmann Eitle

(56) References cited:
- DE-A1-102004 052 675
- JP-A- 54 136 271
- JP-A- S61 147 319
- JP-A- 2006 166 644

## Description

### BACKGROUND OF THE INVENTION

### 1. Field of the Invention

The present invention relates to a power supply circuit built in an earth circuit leakage breaker or the like which is connected to an AC circuit, and also, relates to an earth leakage circuit breaker including the power supply circuit.

### 2. Description of the Related Art

In a power supply circuit built in this sort of earth leakage circuit breaker, an AC voltage (for example, AC 100V) applied from an AC circuit is converted into a DC voltage by a rectifying means, and thereafter, the rectified DC voltage is transformed by a downwards transforming means to a DC voltage (for example, DC 24V) which is lower than the rectified DC voltage, and thus, this lower DC voltage is applied to an earth leakage detecting circuit and a releasing apparatus (tripping apparatus) as a drive power source.

In such a power supply circuit, when a surge voltage is induced in the AC circuit due to a ground discharge, an arc ground, or the like, the earth leakage detecting circuit and the releasing apparatus must be protected from this surge voltage.

As protection means of this surge voltage, such technical ideas are known in which surge absorbers are provided at a previous stage of rectifying means of power supply circuits (for example, JP 2005-137095 A, DE 10 2004 052 675 A1).

Also, other technical ideas are known in which protection-purpose zener diodes are provided just after the rectifying means of the power supply circuits (for example, JP 64-23722 A) .

As previously described, the voltages of the AC circuits are directly applied to surge absorbing elements such as the surge absorbers or the protection-purpose zener diodes, which is provided at the previous stage of or just after the rectifying means. As a result, power losses of the surge absorbing elements caused by the surge voltages are increased. As a consequence, surge absorbing elements having large outer dimensions and also large maximum permissible losses are required to be employed, so that the below-mentioned problems occur. That is, the power supply circuits can be hardly made compact and slim.

JP 54 136 271 A discloses a circuit for increasing a breakdown rating by providing a voltage element which is conductive when a voltage between power supply lines exceeds a given amplitude, and an auxiliary transistor increasing a base current of an output transistor through an amplification of the current flowing to the voltage element.

JP 2006 166 644 A relates to a device for reducing an allowable loss of an element, downsizing an element size and decreasing a mounting area, by suppressing power consumption of a protective device when a power supply surge, i.e. an abnormal voltage, is applied.

JP 61-147 319 A describes realizing a surge protection circuit with high reliability without using a large capacity element by protecting a surge energy without absorbing it while turning off a control transistor.

### SUMMARY OF THE INVENTION

The present invention has been made to solve the above-explained problems, and therefore, has an object to obtain a power supply circuit and an earth leakage circuit breaker, which can employ a surge absorbing element having a small maximum permissible loss, and can be made compact and slim.

According to an aspect of the invention, there is provided a power supply circuit in accordance with claim 1, the power supply circuit comprising: rectifying means for converting an AC voltage applied from an AC power supply into a DC voltage; downwards transforming means for lowering the output voltage of said rectifying means; voltage detecting means for detecting a surge voltage from the output voltage of said rectifying means; upwards transforming means for boosting the output voltage of said downwards transforming means when said voltage detecting means detects the surge voltage; and current absorbing means provided on the output side of said downwards transforming means, for absorbing a surge current when the output voltage of said downwards transforming means reaches a predetermined voltage.

According to the above aspect, the current absorbing means for absorbing the surge current is provided on the output side of the downwards transforming means which lowers the output voltage of the rectifying means. Therefore, a surge absorbing element whose maximum permissible loss is small and whose outer dimension is also small can be used as the current absorbing means. As a result, the power supply circuit can be made compact and slim.

### BRIEF DESCRIPTION OF THE DRAWINGS

Fig. 1 is a circuit diagram for showing an earth leakage circuit breaker including a power supply circuit according to an embodiment 1 of the present invention; and
Fig. 2 is a circuit diagram for indicating a power supply circuit according to an embodiment 2 of the present invention.

### DETAILED DESCRIPTION OF THE PREFERRED EMBODIMENTS

### (EMBODIMENT 1)

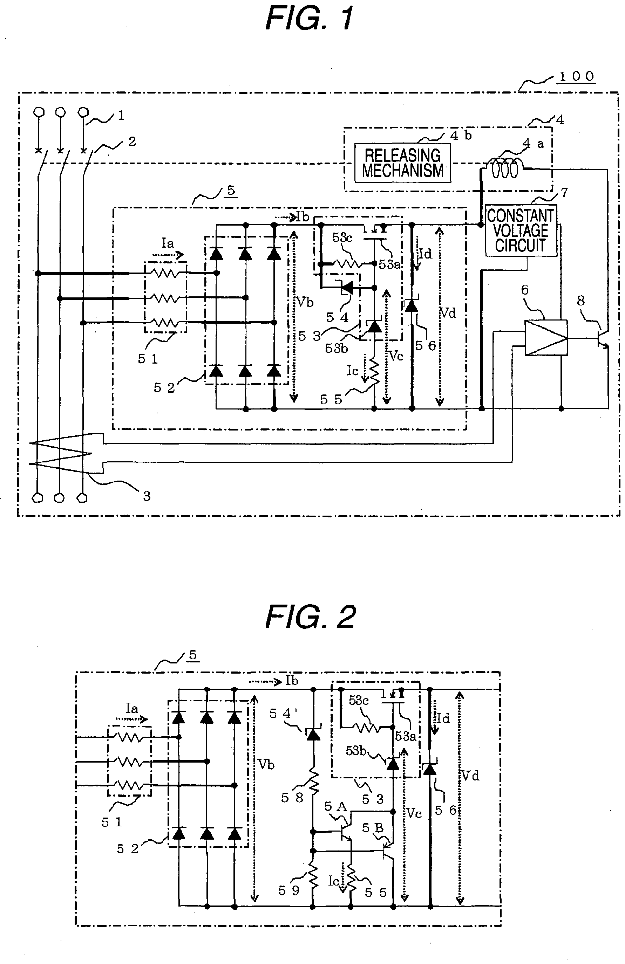

Fig. 1 is a block diagram for showing a configuration of an earth leakage circuit breaker 100 including a power supply circuit 5 according to an embodiment 1 of the present invention.

In Fig. 1, the earth leakage circuit breaker 100 includes a open/close contact 2 for making/breaking an AC circuit 1, an earth leakage detecting circuit 6, a releasing apparatus (tripping apparatus) 4, and the power supply circuit 5 for supplying electric power to both the earth leakage detecting circuit 6 and the releasing apparatus 4. The earth leakage detecting circuit 6 is connected to a zero phase current transformer 3 inserted in the AC circuit 1, and detects an earth leakage based upon a detection signal thereof. The releasing apparatus 4 includes a releasing coil (tripping coil) 4a and a releasing mechanism 4b. The releasing coil 4a is energized by the output signal of the earth leakage detecting circuit 6 via a switching means 8. The releasing mechanism 4b opens and closes the open/close contact 2 when the releasing coil 4a is energized.

The power supply circuit 5 converts an AC voltage entered from the AC circuit 1 into a predetermined DC voltage so as to supply an energizing current to the releasing coil 4a, and also, the DC voltage is converted by a first constant voltage circuit 7 to a predetermined lower voltage than the output voltage of the power supply circuit 5, and then, this lower voltage is applied to the earth leakage detecting circuit 6.

A detailed description will now be made of the power supply circuit 5. That is, in the power supply circuit 5, a rectifying circuit 52 (namely, rectifying means) including a full diode bridge is connected to a later stage of a current limiting resistor 51 (namely, current limiting means) which limits a current and is connected to the AC circuit 1. On the output side of the above-described rectifying circuit 52, a second constant voltage circuit 53 (namely, downwards transforming means) for lowering the output voltage of this rectifying circuit 52 is connected. The second constant voltage circuit 53 includes a field-effect transistor (will be referred to as "FET" hereinafter) 53a, a first zener diode 53b, and a first resistor 53c (resistance value thereof is approximately several hundreds killoohms to several megaohms). A drain of the FET 53a is connected to the positive output side of the rectifying circuit 52. The first zener diode 53b is connected between a gate of the FET 53a and the negative output side of the rectifying circuit 52. The first resistor 53c is connected between the drain and the gate of the FET 53a which supplies a zener current to the first zener diode 53b. A second zener diode 54 (namely, voltage detecting means) is connected parallel to the first resistor 53c of the second constant voltage circuit 53, while this second zener diode 54 detects a surge voltage from the output voltage of the rectifying circuit 52, and a zener voltage of the second zener diode 54 is higher than the output voltage of the rectifying circuit 52. A second resistor 55 (resistance value thereof is approximately several tens ohms to several hundreds ohms), namely, a upwards transforming means series-connected to the first zener diode 53b is connected between the gate of the FET 53a and the negative output side of the rectifying circuit 52. When the second zener diode 54 detects a surge voltage, this second resistor 55 boosts the output voltage of the second constant voltage circuit 53. A third zener diode 56 (namely, current absorbing means) is connected between the source of the FET 53a and the negative output side of the rectifying circuit 52. When the output voltage of the second constant voltage circuit 53 reaches a predetermined value, the third zener diode 56 absorbs a surge current. Then, both the releasing apparatus 4 and the earth leakage detecting circuit 6 have been connected to both terminals of the third zener diode 56, namely connected to the output terminal of the power supply circuit 5.

It should be noted that although the first zener diode 53b is connected to the gate side of the FET 53a and the second resistor 55 is provided on the negative output side of the rectifying circuit 52, the second resistor 55 may be alternatively provided on the gate side of the FET 53a and the first zener diode 53b may be alternatively provided on the negative output side of the rectifying circuit 52.

Also, as the current absorbing means, not only a zener diode, but also a varistor may be employed.

Next, a description is made of operations of the above-described earth leakage circuit breaker 100.

Under normal condition, when an AC voltage from approximately 100 V to 400 V is applied from the AC circuit 1, an AC current "Ia" flows through the current limiting resistor 51, and the AC current "Ia" is converted into a DC voltage "Vb" by the rectifying circuit 52. Based upon a current "Ib" outputted from the rectifying circuit 52, a current "Ic" flows via the first resistor 53c to the first zener diode 53b and the second resistor 55. On the other hand, the zener voltage of the second zener diode 54 is higher than the output voltage Vb of the rectifying circuit 52, so that the second zener diode 54 is not turned ON, but no current flows via the second zener diode 54 to the first zener diode 53b and the second resistor 55.

At this time, the resistance value of the first resistor 53c is larger, i.e., several hundreds killoohms (KΩ) to several megaohms (MΩ), whereas the resistance value of the second resistor 55 is small, i.e., several tens ohm(Ω) to several hundreds ohm(Q). As a result, the current Ic flowing through the second resistor 55 is substantially determined by the first resistor 53c, and becomes very small, for example, several tens microampere (µA) to several hundreds microampere (pA). As a result, a voltage drop of the second resistor 55 can be essentially neglected. As a consequence, assuming now that a voltage (namely, gate voltage of FET 53a) applied between the second resistor 55 and the first zener diode 53b is equal to "Vc", the gate voltage "Vc" becomes nearly equal to (zener voltage of first zener diode 53b).

Also, the output voltage Vd of the second constant voltage circuit 53 becomes Vd=Vc-(ON voltage of FET 53a). As previously explained, the gate voltage Vc is nearly equal to the zener voltage of the first zener diode 53b, so that the output voltage Vd becomes nearly equal to (zener voltage of first zener diode 53b)-(ON voltage of FET 53a).

In this case, assuming now that an ON voltage of the FET 53a is approximately 3 V, and the zener voltage of the first zener diode 53b is approximately 24V, the output voltage Vd of the second constant voltage circuit 53 becomes nearly equal to 21 V (=24V-3V).

Also, assuming now that the zener voltage of the third zener diode 56 is approximately 24 V, the voltage Vd applied to this third zener diode 56 becomes nearly equal to 21 V which does not exceed the zener voltage (namely, 24 V) of the third zener diode 56. Accordingly, the third zener diode 56 is not turned ON, so that the current Id does not flow. As a result, approximately DC 21 V is applied from the output terminal of the power supply circuit 5 to both the releasing coil 4a and the first constant voltage circuit 7, and the first constant voltage circuit 7 drops the output voltage of the power supply circuit 5 so as to apply a preselected constant voltage (for example, DC 5 V) to the earth leakage detecting circuit 6.

In a case where an earth leakage happens to occur in the AC circuit 1 under such a power supply condition, a signal is produced in the output of the zero phase current transformer 3, and the earth leakage detecting circuit 6 judges that the output signal level of the zero phase current transformer 3 exceeds a predetermined reference value, so that the earth leakage detecting circuit 6 outputs an earth leakage trip signal to the switching means 8. The switching means 8 is turned ON by this output trip signal, so that an energizing current may flow from the power supply circuit 5 via the switching means 8 to the releasing coil 4a, and thus, the releasing mechanism 4b is actuated. As a result, the open/close contact 2 is opened.

Next, a description is made of a case where a surge voltage is superimposed on an AC voltage appeared in the AC circuit 1.

When a surge voltage of several kilovolt (KV) is superimposed on an AC voltage, a voltage which is applied to a series circuit constituted by the second zener diode 54 and the first zener diode 53b exceeds a summed zener voltage value between the second zener diode 54 and the first zener diode 53b, so that the second zener diode 54 is also turned ON.

At this time, the current Ic flowing through the second resistor 55 becomes large, i.e., several tens milliampere (mA), as compared with the current of several tens microampere (µA) to several hundreds microampere (µA) under normal condition; and a voltage drop occurs between the second resistor 55, so that the voltage Vc applied to the second resistor 55 and the first zener diode 53b is increased. For example, assuming now that the resistance value of the second resistor 55 is approximately 100 ohms and the current Ic is approximately 40 mA, the above-described voltage drop of the second resistor 55 becomes approximately 4 V, whereas the voltage Vc applied between the second resistor 55 and the first zener diode 53b is given as follows: Vc = 24 V + 4 V = approximately 28 V. The output voltage Vd of the second constant voltage circuit 53 is tried to be increased to approximately 25 V by adding approximately 4 V (the voltage drop of the second resistor 55) with respect to the voltage of about 21 V under normal condition.

However, since this output voltage Vd exceeds the zener voltage (approximately 24 V) of the third zener diode 56, the third zener diode 56 is turned ON, so that the output voltage Vd of the second constant voltage circuit 53 may be suppressed to the zener voltage (approximately 24 V) of the third zener diode 56.

As previously described, the output voltage Vd of the second constant voltage circuit 53 may be suppressed to the zener voltage of the third zener diode 56, so that the earth leakage detecting circuit 6 and the releasing apparatus 4 can be protected from the surge voltage.

In accordance with the embodiment 1, since the third zener diode 56 is provided under low voltage portion, namely approximately 24 V corresponding to the later stage of the downwards transforming means, the power loss of the third zener diode 56 caused by the surge voltage can be greatly reduced.

As a consequence, as the third zener diode 56, a zener diode whose maximum permissible loss is small and whose outer dimension is small can be employed, so that the power supply circuit 5 can be made compact and slim.

Also, the current limiting resistor 51 is provided at the previous stage of the rectifying circuit 52, so that it is also possible to suppress the surge current flowing through the third zener diode 56 when the surge voltage is superimposed on the AC voltage. As a consequence, as the third zener diode 56, a zener diode whose maximum permissible loss is small and whose outer dimension is small can be employed, so that the power supply circuit 5 can be further made compact and slim.

Also, the surge current mainly flows through the third zener diode 56, and thus, only a small current flows through the second zener diode 54. As a result, the power loss of the second zener diode 54 can be decreased. As a consequence, as the second zener diode 54, a zener diode whose maximum permissible loss is small and whose outer dimension is small can be employed, so that the power supply circuit 5 can be further made compact and slim.

Also, when the surge voltage is superimposed on the AC voltage, the output voltage Vb of the rectifying circuit 52 may be suppressed to the zener voltage of the second zener diode 54, so that this rectifying circuit 52 can be protected from the surge voltage.

Also, since the field-effect transistor whose operating speed is high is employed as the downwards transforming means, even when a steep surge voltage having a spike shape is superimposed on the AC voltage, the surge current can be absorbed by the third zener diode 56. As a result, the output voltage Vd of the second constant voltage circuit 53 can be suppressed to the zener voltage of the third zener diode 56, so that the earth leakage detecting circuit 6 and the releasing apparatus 4 can be protected from the surge voltage.

Also, the power supply circuit 5 and the earth leakage circuit breaker 100 according to the embodiment 1 can realize a compact and slim appliance.

### (EMBODIMENT 2)

Fig. 2 is a circuit diagram for showing a configuration of a power supply circuit according to an embodiment 2 of the present invention.

The embodiment 2 represents an embodiment which is different from the power supply circuit 5 in the embodiment 1, and may achieve various effects similar to those of the above-described embodiment 1.

In Fig. 2, instead of the second zener diode 54, a fourth zener diode 54' (zener voltage thereof is higher than output voltage of rectifying circuit 52) is series-connected between the positive output side and the negative output side of the rectifying circuit 52 in combination with a third resistor 58 and a fourth resistor 59, while this fourth zener diode 54' is employed as a voltage detecting means. At this time, the fourth zener diode 54' is connected to the positive output side of the rectifying circuit 52, whereas the fourth resistor 59 is connected to the negative output side of the rectifying circuit 52.

Also, an npn type transistor 5A is connected between the anode of the first zener diode 53b and the second resistor 55 in such a manner that a collector of this npn type transistor 5A is connected on the side of the first zener diode 53b, and an emitter thereof is connected on the side of the second resistor 55. A base of the npn type transistor 5A is connected to a junction point between the third resistor 58 and the fourth resistor 59. Also, a pnp type transistor 5B is connected between the anode of the first zener diode 53b and the negative output side of the rectifying circuit 52 in such a manner that an emitter of this pnp type transistor 5B is connected on the side of the first zener diode 53b, and a collector thereof is connected on the side of the negative output side of the rectifying circuit 52. Similar to the base of the npn type transistor 5A, a base of the pnp type transistor 5B is connected to the junction point between the third resistor 58 and the fourth resistor 59.

It should be understood that other circuit arrangements and operations of the above-described power supply circuit are similar to those of the embodiment 1, and therefore, descriptions thereof will be omitted.

Next, a description is made of operations as to the power supply circuit of the embodiment 2.

Under normal condition, since the output voltage Vb of the rectifying circuit 52 does not exceed the zener voltage of the fourth zener diode 54', the fourth zener diode 54' is not turned ON. As a consequence, a current does not flow through the third resistor 58 and the fourth resistor 59, so that each of base voltages at the pnp type transistor 5B and the npn type transistor 5A becomes 0 V. As a result, since the pnp type transistor 5B is turned ON and the npn type transistor 5A is turned OFF, a zener current flows through the first resistor 53c and the pnp type transistor 5B, and thus, the gate voltage Vc of the FET 53a becomes equal to the zener voltage of the first zener diode 53b.

Also, the output voltage Vd of the second constant voltage circuit 53 becomes equal to Vc - (ON voltage of FET 53a) . However, as previously described, since the voltage Vc is equal to the zener voltage of the first zener diode 53b, this output voltage Vd becomes equal to (zener voltage of first zener diode 53b) - (ON voltage of FET 53a) .

In this case, assuming now that the ON voltage of the FET 53a is approximately 3 V, and the zener voltage of the first zener diode 53b is approximately 24V, the output voltage Vd of the second constant voltage circuit 53 becomes equal to 21 V (=24V-3V).

Also, assuming now that the zener voltage of the third zener diode 56 is approximately 24 V, the voltage Vd applied to this third zener diode 56 becomes nearly equal to 21 V which does not exceed the zener voltage (namely, 24 V) of the third zener diode 56. Accordingly, the third zener diode 56 is not turned ON, so that the current Id does not flow. As a result, approximately DC 21 V is applied from the output terminal of the power supply circuit 5 to both the releasing coil 4a and the first constant voltage circuit 7, and the first constant voltage circuit 7 drops the output voltage of the power supply circuit 5 so as to apply a preselected constant voltage (for example, DC 5 V) to the earth leakage detecting circuit 6.

Next, a description is made of a case where a surge voltage is superimposed on an AC voltage appeared on the AC circuit 1.

When a surge voltage of several Kilovolt (KV) is superimposed on an AC voltage, a voltage applied to the fourth zener diode 54' exceeds the zener voltage of the fourth zener diode 54', so that this fourth zener diode 54' is turned ON. As a consequence, a current flows via the fourth zener diode 54' into both the third resistor 58 and the fourth resistor 59, so that voltages are produced at the respective bases of the pnp type transistor 5B and the npn type transistor 5A. As a result, the pnp type transistor 5B is turned OFF and the npn type transistor 5A is turned ON, and thus, the current Ic flows via the npn type transistor 5A into the second resistor 55, so that a voltage drop may occur.

Similar to the embodiment 1, assuming now that the resistance value of the second resistor 55 is selected to be approximately 100 ohms, since the current IC of approximately 40 mA flows, the above-described voltage drop of the second resistor 55 becomes approximately 4 V, whereas the gate voltage Vc of the FET 53a is given as follows: Vc = 24 V + 4 V = approximately 28 V. The output voltage Vd of the second constant voltage circuit 53 is tried to be increased to approximately 25 V by adding approximately 4 V (the voltage drop of the second resistor 55) with respect to the voltage of about 21 V under normal condition. However, since this output voltage Vd exceeds the zener voltage (approximately 24 V) of the third zener diode 56, the third zener diode 56 is turned ON, so that the output voltage Vd of the second constant voltage circuit 53 may be suppressed to the zener voltage (approximately 24 V) of the third zener diode 56.

As previously described, the output voltage Vd of the second constant voltage circuit 53 may be suppressed to the zener voltage of the third zener diode 56, so that the earth leakage detecting circuit 6 and the releasing apparatus 4 can be protected from the surge voltage.

In accordance with the embodiment 2, since the third zener diode 56 is provided under low voltage portion, namely approximately 24 V corresponding to the later stage of the downwards transforming means, the power loss of the third zener diode 56 caused by the surge voltage can be greatly reduced.

As a consequence, as the third zener diode 56, a zener diode whose maximum permissible loss is small and whose outer dimension is small can be employed, so that the power supply circuit 5 can be made compact and slim.

Also, the current limiting resistor 51 is provided at the previous stage of the rectifying circuit 52, so that it is also possible to suppress the surge current flowing through the third zener diode 56 when the surge voltage is superimposed on the AC voltage. As a consequence, as the third zener diode 53, a zener diode whose maximum permissible loss is small and whose outer dimension is small can be employed, so that the power supply circuit 5 can be further made compact and slim.

Also, the power supply circuit 5 and the earth leakage circuit breaker 100 according to the embodiment 2 can realize a compact and slim appliance.

## Claims

1. A power supply circuit (5) comprising:
rectifying means (52) for converting an AC voltage applied from an AC power supply (1) into a DC voltage;
downwards transforming means (53) for lowering the output voltage of said rectifying means (52), the downwards transforming means (53) comprising
a field-effect transistor (53a) whose drain is connected to a positive-sided output terminal of said rectifying means (52),
a first resistor (53c) connected between said drain and a gate of said field-effect transistor (53a), and
a first zener diode (53b) connected between said gate of the field-effect transistor (53a) and a negative-sided output terminal of said rectifying means (52); and further comprising in accordance with a first alternative:
voltage detecting means for detecting a surge voltage from the output voltage of said rectifying means (52), said voltage detecting means comprising a second zener diode (54) connected between said drain and said gate of the field-effect transistor (53a), and
upwards transforming means for boosting the output voltage of said downwards transforming means (53) when said voltage detecting means (54) detects the surge voltage,
said upwards transforming means comprising a second resistor (55) series-connected to said first zener diode (53b) between said gate of the field-effect transistor and said negative-sided output terminal of said rectifying means (52); or
further comprising in accordance with a second alternative:
voltage detecting means (54') for detecting a surge voltage from the output voltage of said rectifying means (52), said voltage detecting means comprising a fourth zener diode (54'), a third resistor (58), and a fourth resistor (59), which are connected between the positive-sided output terminal of said rectifying means (52) and the negative-sided output terminal thereof (52) in a sequential manner from said positive-sided output terminal side, upwards transforming means for boosting the output voltage of said downwards transforming means (53) when said voltage detecting means (54') detects the surge voltage,
said upwards transforming means comprising:
a second resistor (55) provided between the negative-sided output terminal of said rectifying means (52) and said first zener diode (53b), and
a switch circuit (5A) configured to short-circuit said second resistor (55) in response to a voltage appeared at a junction point between said third resistor (58) and said fourth resistor (59) when said fourth zener diode (54') is not conductive; and
further comprising in accordance with the first alternative and the second alternative: current absorbing means (56) provided on the output side of said downwards transforming means (53), for absorbing a surge current when the output voltage of said downwards transforming means (53) reaches a predetermined voltage.

2. A power supply circuit (5) according to claim 1, further comprising:
current limiting means (51) provided on the input side of said rectifying means (52).

3. A power supply circuit (5) according to claim 1 or 2, wherein said current absorbing means (56) includes a zener diode.

4. An earth leakage circuit breaker (100) comprising:
a zero phase current transformer (3) for detecting an earth leakage current of a circuit;
an earth leakage detecting circuit (6) for judging whether or not an earth leakage occurs based upon the signal detected by said zero phase current transformer (3);
a releasing apparatus (4) for releasing a open/close contact (2) provided in said circuit in response to the output of said earth leakage detecting circuit (6); and **characterised by** comprising
the power supply circuit (5) recited in any one of claims 1 to 3, for supplying electric power from said circuit to both said earth leakage detecting circuit (6) and said releasing circuit (4).

## Patentansprüche

1. Stromversorgungsschaltung (5) aufweisend:
ein Gleichrichtermittel (52) zum Umwandeln einer Wechselspannung, die von einer Wechselstromquelle (1) angelegt ist, in eine Gleichspannung;
ein Abwärtstransformationsmittel (53) zum Verringern der Ausgangsspannung des Gleichrichtermittels (52), wobei das Abwärtstransformationsmittel (52) aufweist:
einen Feldeffekttransistor (53a), dessen Senke mit einem positivseitigen Ausgangsanschluss des Gleichrichtermittels (52) verbunden ist,
einen ersten Widerstand (53c), der zwischen der Senke und einem Tor des Feldeffekttransistors (53a) verbunden ist, und
eine erste Zenerdiode (53b), die zwischen dem Tor des Feldeffekttransistors (53a) und einem negativseitigen Ausgangsanschluss des Gleichrichtermittels (52) verbunden ist; und
gemäß einer ersten Alternative ferner aufweisend:
ein Spannungserfassungsmittel zum Erfassen einer Stoßspannung von der Ausgangsspannung des Gleichrichtermittels (52), wobei das Spannungserfassungsmittel eine zweite Zenerdiode (54) aufweist, die zwischen der Senke und dem Tor des Feldeffekttransistors (53a) verbunden ist, und
ein Aufwärtstransformationsmittel zum Erhöhen der Ausgangsspannung des Abwärtstransformationsmittels (53) wenn das Spannungserfassungsmittel (54) die Stoßspannung erfasst,
wobei das Aufwärtstransformationsmittel einen zweiten Widerstand (55)aufweist, der mit der ersten Zenerdiode (53b) zwischen dem Tor des Feldeffekttransistors und dem negativseitigen Ausgangsanschluss des Gleichrichtermittels (52) in Serie verbunden ist; oder
gemäß einer zweiten Alternative ferner aufweisend:
ein Spannungserfassungsmittel (54') zum Erfassen einer Stoßspannung von der Ausgangsspannung des Gleichrichtermittels (52), wobei das Spannungserfassungsmittel eine vierte Zenerdiode (54'), einen dritten Widerstand (58), und einen vierten Widerstand (59) aufweist, die zwischen dem positivseitigen Ausgangsanschluss des Gleichrichtermittels (52) und dem negativseitigen Ausgangsanschluss davon (52) von der Seite des positivseitigen Ausgangsanschlusses in einer sequentiellen Weise verbunden sind,
ein Aufwärtstransformationsmittel zum Erhöhen der Ausgangsspannung des Abwärtstransformationsmittels (53) wenn das Spannungserfassungsmittel (54') die Stoßspannung erfasst,
wobei das Aufwärtstransformationsmittel aufweist:
einen zweiten Widerstand (55), der zwischen dem negativseitigen Ausgangsanschluss des Gleichrichtermittels (52) und der ersten Zenerdiode (53b) vorgesehen ist, und
eine Schalterschaltung (5A), die zum Kurzschließen des zweiten Widerstands (55) in Reaktion auf eine an einem Verbindungspunkt zwischen dem dritten Widerstand (58) und dem vierten Widerstand (59) auftretende Spannung, wenn die vierte Zenerdiode (54') nicht leitend ist, eingerichtet ist; und
gemäß der ersten Alternative und der zweiten Alternative ferner aufweisend: ein Stromabsorptionsmittel (56), das an der Ausgangsseite des Abwärtstransformationsmittels (53) angeordnet ist, zum Absorbieren eines Stoßstroms wenn die Ausgangsspannung des Abwärtstransformationsmittels (53) eine vorbestimmte Spannung erreicht.

2. Stromversorgungsschaltung (5) nach Anspruch 1, ferner aufweisend: ein Strombegrenzungsmittel (51), das an der Eingangsseite des Gleichrichtermittels (52) vorgesehen ist.

3. Stromversorgungsschaltung (5) nach Anspruch 1 oder 2, bei der das Stromabsorptionsmittel (56) eine Zenerdiode aufweist.

4. Fehlerstromschutzschalter (100) aufweisend:
einen Nullphasenstromwandler (3) zum Erfassen eines Erdableitstroms einer Schaltung;
eine Erdschlusserfassungsschaltung (6) zum Beurteilen, ob ein Erdschlusss auftritt oder nicht, basierend auf dem Signal, das durch den Nullphasenstromwandler (3) erfasst wird;
eine Freigabevorrichtung (4) zum Freigeben eines Öffnungs-/Schließkontakts (2), der in der Schaltung in Reaktion auf den Ausgang der Erdschlusserfassungsschaltung (6) vorgesehen ist; und **dadurch gekennzeichnet, dass** der Fehlerstromschutzschalter aufweist:
die Stromversorgungsschaltung (5) gemäß einem der Ansprüche 1 bis 3, zum Zuführen von elektrischer Energie von der Schaltung zu sowohl der Erdschlusserfassungsschaltung (6) als auch der Freigabeschaltung (4).

## Revendications

1. Circuit d'alimentation électrique (5) comprenant :
des moyens redresseurs (52) pour convertir une tension CA appliquée à partir d'une alimentation électrique CA (1) en une tension CC ;
des moyens de transformation à la baisse (53) pour abaisser la tension de sortie desdits moyens redresseurs (52), les moyens de transformation à la baisse (53) comprenant
un transistor à effet de champ (53a) dont le drain est connecté à une borne de sortie côté positif desdits moyens redresseurs (52),
une première résistance (53c) connectée entre ledit drain et une grille dudit transistor à effet de champ (53a), et
une première diode Zener (53b) connectée entre ladite grille du transistor à effet de champ (53a) et une borne de sortie côté négatif desdits moyens redresseurs (52) ; et
comprenant en outre selon une première variante :
des moyens de détection de tension pour détecter une surtension à partir de la tension de sortie desdits moyens redresseurs (52), lesdits moyens de détection de tension comprenant une deuxième diode Zener (54) connectée entre ledit drain et ladite grille du transistor à effet de champ (53a), et
des moyens de transformation à la hausse pour stimuler la tension de sortie desdits moyens de transformation à la baisse (53) lorsque lesdits moyens de détection de tension (54) détectent la surtension,
lesdits moyens de transformation à la hausse comprenant une deuxième résistance (55) connectée en série à ladite première diode Zener (53b) entre ladite grille du transistor à effet de champ et ladite borne de sortie côté négatif desdits moyens redresseurs (52) ; ou
comprenant en outre selon une seconde variante :
des moyens de détection de tension (54') pour détecter une surtension à partir de la tension de sortie desdits moyens redresseurs (52), lesdits moyens de détection de tension comprenant une quatrième diode Zener (54'), une troisième résistance (58) et une quatrième résistance (59), qui sont connectées entre la borne de sortie côté positif desdits moyens redresseurs (52) et la borne de sortie côté négatif (52) de ceux-ci d'une manière séquentielle à partir dudit côté de borne de sortie côté positif,
des moyens de transformation à la hausse pour stimuler la tension de sortie desdits moyens de transformation à la baisse (53) lorsque lesdits moyens de détection de tension (54') détectent la surtension,
lesdits moyens de transformation à la hausse comprenant :
une deuxième résistance (55) prévue entre la borne de sortie côté négatif desdits moyens redresseurs (52) et ladite première diode Zener (53b), et
un circuit de commutation (5A) configuré pour court-circuiter ladite deuxième résistance (55) en réponse à une tension apparue au niveau d'un point de jonction entre ladite troisième résistance (58) et ladite quatrième résistance (59) lorsque ladite quatrième diode Zener (54') n'est pas conductrice ;
et
comprenant en outre selon la première alternative et la seconde alternative : des moyens d'absorption de courant (56) prévus sur le côté de sortie desdits moyens de transformation à la baisse (53), pour absorber une surintensité lorsque la tension de sortie desdits moyens de transformation à la baisse (53) atteint une tension prédéterminée.

2. Circuit d'alimentation électrique (5) selon la revendication 1, comprenant en outre :
des moyens limiteurs de courant (51) prévus sur le côté d'entrée desdits moyens redresseurs (52).

3. Circuit d'alimentation électrique (5) selon la revendication 1 ou 2,
dans lequel lesdits moyens d'absorption de courant (56) incluent une diode Zener.

4. Disjoncteur (100) contre pertes à la terre comprenant :
un transformateur de courant de phase nulle (3) pour détecter un courant de perte à la terre d'un circuit ;
un circuit de détection de perte à la terre (6) pour estimer s'il se produit ou pas une perte à la terre sur la base du signal détecté par ledit transformateur de courant de phase nulle (3) ;
un appareil de déclenchement (4) pour déclencher un contact d'ouverture/fermeture (2) prévu dans ledit circuit en réponse à la sortie dudit circuit de détection de perte à la terre (6) ; et
**caractérisé en ce qu'**il comprend
le circuit d'alimentation électrique (5) selon l'une quelconque des revendications 1 à 3, pour fournir une alimentation électrique depuis ledit circuit à la fois vers ledit circuit de détection de perte à la terre (6) et ledit circuit de déclenchement (4).
